(19) Europäisches Patentamt
European Patent Office
Office européen des brevets

(11) EP 3 726 683 A1

(12) EUROPÄISCHE PATENTANMELDUNG

(43) Veröffentlichungstag:
21.10.2020 Patentblatt 2020/43

(51) Int Cl.:
H02J 3/00 (2006.01)    H02J 3/14 (2006.01)

(21) Anmeldenummer: 19169596.4

(22) Anmeldetag: 16.04.2019

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
KH MA MD TN

(71) Anmelder: Siemens Aktiengesellschaft
80333 München (DE)

(72) Erfinder:
• Baumgärtner, Thomas
  91056 Erlangen (DE)
• Langemeyer, Stefan
  90489 Nürnberg (DE)
• Thiem, Sebastian
  91413 Neustadt an der Aisch (DE)

(54) VERFAHREN ZUM MODELLBASIERTEN BESTIMMEN ZUMINDEST EINES AUSLEGUNGSPARAMETERS EINES THERMISCHEN ENERGIESPEICHERS SOWIE ELEKTRONISCHE RECHENEINRICHTUNG

(57) Die Erfindung betrifft ein Verfahren zum modellbasierten Bestimmen zumindest eines Auslegungsparameters (26) eines thermischen Energiespeichers (12) eines Energiesystems (10) zum Erzeugen von thermischer Energie ($P_{th}$) für einen Verbraucher (18) des Energiesystems (10) mittels des Energiesystems (10), bei welchem der zumindest eine Auslegungsparameter (26) in Abhängigkeit zumindest eines vorgegebenen Preisprofils (20) für energiesystemexterne elektrische Energie ($P_{el}$) und in Abhängigkeit zumindest eines vorgegebenen thermischen Lastprofils (22) für thermische Energie ($P_{th}$) des Energiesystems (10) und in Abhängigkeit zumindest einer vorgegebenen Maximalleistung (24) für das Lastprofil (22) und in Abhängigkeit zumindest einer wärmetechnischen Erzeugungseinrichtung (14) des Energiesystems (10) mittels einer elektronischen Recheneinrichtung (16) des Energiesystems (10) bestimmt wird. Ferner betrifft die Erfindung ein Computerprogrammprodukt sowie eine elektronische Recheneinrichtung (16).

FIG 2

EP 3 726 683 A1

**Beschreibung**

Die Erfindung betrifft ein Verfahren zum modellbasierten Bestimmen zumindest eines Auslegungsparameters eines thermischen Energiespeichers eines Energiesystems zum Erzeugen von thermischer Energie für einen Verbraucher des Energiesystems mittels des Energiesystems. Ferner betrifft die Erfindung ein Computerprogrammprodukt sowie eine elektronische Recheneinrichtung für ein Energiesystem zum modellbasierten Bestimmen eines Auslegungsparameters eines thermischen Energiespeichers für das Energiesystem.

Energiemanagementsysteme (EMS) für Energiesysteme sind aus dem Stand der Technik bereits bekannt. Insbesondere ist eine der Hauptaufgaben der Energiemanagementsysteme die Koordination von gebäudeinterner Erzeugung, Speicherung und Verbrauch von Energie, insbesondere von thermischer Energie. Dies umfasst das Management von erneuerbaren Energiequellen, zum Beispiel Photovoltaik-Anlagen, elektrischen und thermischen Speichern, Blockheizkraftwerken, Wärmepumpen und steuerbaren Lasten, wie zum Beispiel das Laden von Elektroautos oder die Ansteuerung von zusätzlichen elektrischen Heizstäben zur Warmwassergewinnung.

Zum Umfang eines umfassenden Energiemanagementsystems gehören auch elektrische und thermische Messungen, die Überwachung der Infrastruktur, die Datenanalyse sowie geeignete Prognoseverfahren. Insbesondere ist dabei vorgesehen, dass das Energiemanagementsystem dabei Verbrauch und Erzeugung unter Berücksichtigung von dynamischen Preisen, sogenannten Incentives, soweit wie möglich in Einklang bringt. Weiterhin ermöglicht das Energiemanagementsystem die Vorhersage des eigenen Lastprofils, beispielsweise 24 Stunden im Voraus, durch ein Planungsmodul. Eine weitere Herausforderung für Energiemanagementsysteme von Gebäuden ist die Unsicherheit von vorhergesagten Größen, besonders bei regenerativen Energiequellen wie Photovoltaik.

Durch den notwendigen Investitionsbedarf, beispielsweise in Messtechnik, Kommunikationsinfrastruktur, steuerbarer Komponenten sowie Engineering, vor allem in Bestandsgebäuden, ist ein schrittweiser Einbau der erforderlichen Komponenten sinnvoll. Ist zum Beispiel ohnehin der Einbau eines thermischen Energiespeichers vorgesehen, so kann dieser vorteilhaft in das System integriert werden, sodass die spätere Ansteuerung durch das Energiemanagementsystem ermöglicht wird.

Zum Bestimmen von diversen Parametern des Energiesystems sind aus dem Stand der Technik bereits Werkzeuge für elektronische Recheneinrichtungen bekannt, welche in der Auslegungsplanung von Energiesystemen zum Einsatz kommen. Diese Werkzeuge werden auch als Energysystem Design-Tools (ESD-Tools) bezeichnet. Diese sind allerdings für Experten gedacht, haben eine hohe Abstraktionsebene, berücksichtigen nicht die technische Anbindung, die Messinfrastruktur sowie die Details der Sensorauslegung und sind daher zum Beispiel für den vor-Ort-Betrieb ungeeignet. Die ESD-Tools eignen sich vielmehr für eine Vorabplanung zur Bestimmung der Technologien beziehungsweise der Struktur eines Energiesystems überhaupt.

Aufgabe der vorliegenden Erfindung ist es, ein Verfahren sowie eine elektronische Recheneinrichtung zu schaffen, mittels welcher zumindest ein Auslegungsparameter eines thermischen Energiespeichers eines Energiesystems modellbasiert bestimmt werden kann.

Diese Aufgabe wird durch ein Verfahren sowie durch eine elektronische Recheneinrichtung gemäß den unabhängigen Patentansprüchen gelöst. Vorteilhafte Ausgestaltungsformen sind in den Unteransprüchen angegeben.

Ein Aspekt der Erfindung betrifft ein Verfahren zum modellbasierten Bestimmen zumindest eines Auslegungsparameters eines thermischen Energiespeichers eines Energiesystems zum Erzeugen von thermischer Energie für einen Verbraucher des Energiesystems mittels des Energiesystems. Bei dem Verfahren wird der zumindest eine Auslegungsparameter in Abhängigkeit zumindest eines vorgegebenen Preisprofils für energiesystemexterne elektrische Energie und in Abhängigkeit zumindest eines vorgegebenen thermischen Lastprofils für thermische Energie des Energiesystems und in Abhängigkeit zumindest einer vorgegebenen Maximalleistung für das Lastprofil und in Abhängigkeit zumindest einer wärmetechnischen Erzeugungseinrichtung des Energiesystems mittels einer elektronischen Recheneinrichtung des Energiesystems bestimmt.

Dadurch ist es ermöglicht, dass modellbasiert der zumindest eine Auslegungsparameter für den thermischen Energiespeicher bereits vorab bestimmt werden kann. Insbesondere kann somit, sollte sich beispielsweise herausstellen, dass für das Energiesystem ein thermischer Energiespeicher empfehlenswert ist, dieser detailliert mit dem zumindest einen Auslegungsparameter bestimmt werden. Somit ermöglicht das erfindungsgemäße Verfahren die Auslegung des thermischen Energiespeichers unter Berücksichtigung der erforderlichen Erweiterung für das Energiesystem und kann beispielsweise im Vertrieb eingesetzt werden. Der thermische Energiespeicher kann dann standardmäßig betrieben werden und beispielsweise als Pufferspeicher für ein Blockheizkraftwerk oder eine Wärmepumpe genutzt werden, als auch in einem systemweiten Energiesystem-Konzept integriert werden.

Unter modellbasiertem Bestimmen ist insbesondere eine Simulation des Energiesystems zu verstehen. Es wird somit das Energiesystem simuliert, wodurch der zumindest eine Auslegungsparameter bestimmt werden kann. Die elektronische Recheneinrichtung kann insbesondere zusätzlich zum Regeln des Energiesystems ausgebildet sein und dann auch als Energiemanagementsystem bezeichnet werden.

Insbesondere kann vorgesehen sein, dass auch mehr als ein Preisprofil, mehr als ein Lastprofil, mehr als eine Maximalleistung und mehr als eine thermische Erzeugungseinrichtung bei der Bestimmung des Auslegungsparameters berücksichtigt werden.

Insbesondere werden dadurch die Anforderungen an ein systemweites, modellbasiertes Energiesystem berücksichtigt. Die nachträgliche Ertüchtigung ist somit mit einem geringen Zeitaufwand ermöglicht. Dadurch ist eine Nachrüstung, insbesondere im laufenden Betrieb des Energiesystems möglich.

Insbesondere weist das Preisprofil eine charakteristische Höckerbildung im Tagesverlauf auf. Hierzu kann das Preisprofil beispielsweise ein nutzergewähltes Profil aufweisen, das in Hochpreisteile und Niedrigpreisteile unterteilt werden kann. Ferner kann möglich sein, dass das Verfahren ein automatisch erzeugtes Preisprofil, wie beispielsweise sogenannte EPEX-Daten sowie einen Versorger-Aufschlag, nutzt.

Als energiesystemexterne elektrische Energie kann insbesondere die elektrische Energie eines Versorgers, beispielsweise eines öffentlichen Netzes, angesehen werden.

Insbesondere kann vorgesehen sein, dass die bereits vorhandenen wärmetechnischen Erzeugungseinrichtungen, zum Beispiel Blockheizkraftwerke, Wärmepumpen und deren maximale Leistung, mit zum Beispiel der Temperatur des Fluids und dem Massenstrom, mit bei dem modellbasierten Bestimmen des zumindest einen Auslegungsparameters berücksichtigt werden.

Ferner kann vorgesehen sein, dass eine optionale StandardAuslegung des thermischen Wärmespeichers, wie beispielsweise Kapazität, Volumen, Höhe und Breite mit bei der Bestimmung des modellbasierten Auslegungsparameters berücksichtigt wird. Insbesondere kann zusätzlich eine optionale Eingabe oder Auswahl eines typischen elektrischen Lastprofils durchgeführt werden. Ferner kann eine optionale Eingabe oder Auswahl eines Aufstellorts, beispielsweise im Innenbereich oder im Außenbereich, durchgeführt werden. Ferner kann eine optionale Eingabe/Auswahl für eine typische Umgebungstemperatur des Aufstellorts eingestellt werden. Des Weiteren kann vorgesehen sein, dass optional verschiedene Speichermodelle des thermischen Speichers, beispielsweise ein einfacher thermischer Speicher, ein fortgeschrittener thermischer Speicher oder ein automatischer thermischer Speicher, mitberücksichtigt werden. Des Weiteren kann vorgesehen sein, dass optional die Eingabe oder Auswahl von bereits vorhandener PV (Photovoltaik)-Einspeisung am Standort sowie eines elektrischen Erzeugungs-Profils durchgeführt werden kann.

Gemäß einer vorteilhaften Ausgestaltungsform wird zum Bestimmen des zumindest einen Auslegungsparameters eine Verhältniszahl zwischen genutzter elektrischer Leistung und erzeugter thermischer Leistung mittels der elektronischen Recheneinrichtung genutzt. Insbesondere nutzt die elektronische Recheneinrichtung zum Bestimmen des mindestens einen Auslegungsparameters somit ein heuristisches Verfahren Insbesondere ist dieses heuristische Verfahren sehr recheneffizient. Insbesondere wird hierzu zunächst ermittelt, mit welcher Komponente die Wärme erzeugt wird. Beispielhaft kann hier ein Blockheizkraftwerk, eine Wärmepumpe und ein Heizstab angesehen werden. Durch die Verhältniszahl wird dann bestimmt, wie sich die elektrische Leistung zur thermischen Leistung verhält. Die Verhältniszahl kann beispielsweise mit dem sogenannten COP-Wert bei Wärmepumpen verglichen werden. Durch die Bestimmung der Verhältniszahl ist es auf einfache Art und Weise ermöglicht, den Auslegungsparameter für den thermischen Energiespeicher zu bestimmen.

Es hat sich weiterhin als vorteilhaft erwiesen, wenn der zumindest eine Auslegungsparameter bei einem vorgegebenen Arbeitspunkt, insbesondere bei einer vorgegebenen Außentemperatur für den thermischen Energiespeicher, bestimmt wird. Insbesondere hat dies den Hintergrund darin, dass in Realität die Verhältniszahl nicht konstant ist, sondern zum Beispiel von der Außentemperatur oder der Auslastung der Komponenten abhängig ist. Um vereinfacht den Auslegungsparameter bestimmen zu können, nutzt das erfindungsgemäße Verfahren in dieser Ausprägung den vorgegebenen Arbeitspunkt, welcher insbesondere eine vorgegebenen Außentemperatur, beispielsweise 21 °C, entspricht. Dadurch ist es auf einfache Art und Weise und recheneffizient ermöglicht, den Auslegungsparameter bestimmen zu können.

In einer weiteren vorteilhaften Ausgestaltungsform wird der zumindest eine Auslegungsparameter bei einem vorgegeben Außentemperaturprofil, welches zeitlich aufgelöst die Außentemperatur aufweist, für den thermischen Energiespeicher, bestimmt. Mit anderen Worten werden genauere Außentemperaturmodelle genutzt. Ferner können auch die Auslastungen der Komponenten als Modelle hierzu mitgenutzt werden Beispielsweise kann das Außentemperaturprofil eine Temperaturaufzeichnung über ein Jahr aufweisen. Dies kann monatsaufgelöst, tagesaufgelöst, stundenaufgelöst, minutenaufgelöst ausgebildet sein. Dadurch kann zuverlässig und hochpräzise der zumindest eine Auslegungsparameter des thermischen Energiespeichers bestimmt werden.

Ferner kann vorgesehen sein, dass zum Bestimmen des zumindest einen Auslegungsparameters eine Betriebsstrategie des thermischen Energiespeichers in Abhängigkeit des vorgegebenen Preisprofils und des thermischen Lastprofils erzeugt wird. Insbesondere kann vorgesehen sein, dass aus dem typischen thermischen Lastprofil, beispielsweise über 24 Stunden, insbesondere zusätzlich der maximalen thermischen Last sowie dem vorgegebenen Preisprofil, welches nutzerabhängig oder automatisch zum Beispiel aus der Strombörse vorgegeben wird, die Betriebsstärke abgeleitet wird. Insbesondere kann dazu vorgesehen sein, dass das Preisprofil hierzu in einen Niedrigpreisteil und in einen Hochpreisteil eingeteilt wird. Dadurch ist es ermöglicht, dass zuverlässig der zumindest eine Auslegungsparameter des thermischen Energiespeichers bestimmt werden kann.

In einer vorteilhaften Ausgestaltungsform wird der zumindest eine Auslegungsparameter derart bestimmt, dass bei einer negativen Verhältniszahl und bei einem Hochpreisteil des vorgegebenen Preisprofils die thermische Energie des thermischen Energiespeichers für den Verbraucher genutzt. Insbesondere wird somit die Last des Verbrauchers primär aus dem thermischen Energiespeicher gedeckt, was zu einer Kostenreduktion führen kann. Insbesondere unter Berücksichtigung dieser Betriebsstrategie kann vorteilhaft der zumindest eine Auslegungsparameter des thermischen Energiespeichers bestimmt werden.

Ferner hat es sich als vorteilhaft erwiesen, dass der zumindest eine Auslegungsparameter derart bestimmt wird, dass bei einer positiven Verhältniszahl und bei einem Niedrigpreisteil des vorgegebenen Preisprofils die erzeugte thermische Energie der wärmetechnischen Erzeugungseinrichtung zum Laden des thermischen Energiespeichers genutzt wird. Insbesondere kann die positive Verhältniszahl beispielsweise bei einem Blockheizkraftwerk als wärmetechnische Erzeugungseinrichtung erzeugt werden. Bei dem Blockheizkraftwerk entsteht sowohl eine positive elektrische Leistung als auch eine positive thermische Leistung, so dass die positive Verhältniszahl entsteht. Insbesondere ist es dadurch ermöglicht, dass die vom Verteilnetz benötige elektrische Energie, mit anderen Worten die energiesystemexterne elektrische Energie, im Hochpreisfenster reduziert werden kann. Insbesondere erfolgt somit während dieser Ausgestaltungsform eine Versorgung des Verbrauchers mit thermischer Energie des thermischen Energiespeichers.

In einer weiteren vorteilhaften Ausgestaltungsform wird der zumindest eine Auslegungsparameter derart bestimmt, dass bei einer negativen Verhältniszahl und bei einem Niedrigpreisteil des vorgegebenen Preisprofils die erzeugte thermische Energie der wärmetechnischen Erzeugungseinrichtung von dem Verbraueher genutzt wird. Die negative Verhältniszahl entsteht insbesondere bei Heizstäben als wärmetechnische Erzeugungseinrichtung beziehungsweise bei Wärmepumpen als wärmetechnische Erzeugungseinrichtung. Somit decken diese wärmetechnischen Erzeugungseinrichtungen direkt die Last des Verbrauchers ab. Insbesondere kann zusätzlich dabei vorgesehen sein, dass die verbleibende Wärme, welche durch die wärmetechnischen Erzeugungseinrichtungen erzeugt werden zum Laden des thermischen Energiespeichers genutzt werden. Dadurch kann verbessert modellbasiert der zumindest eine Auslegungsparameter bestimmt werden.

Gemäß einer weiteren vorteilhaften Ausgestaltungsform wird der zumindest eine Auslegungsparameter derart bestimmt, dass bei einer positiven Verhältniszahl und bei einem Hochpreisteil des vorgegebenen Preisprofils die erzeugte thermische Energie der wärmetechnischen Erzeugungseinrichtung von dem Verbraucher direkt genutzt wird. Insbesondere kann vorgesehen sein, dass auch hier eine verbleibende Wärme der wärmetechnischen Erzeugungseinrichtung zum Laden des thermischen Energiespeichers genutzt wird. Dadurch kann verbessert der Auslegungsparameter des thermischen Energiespeichers bestimmt werden.

Ferner hat es sich als vorteilhaft erwiesen, dass als der zumindest eine Auslegungsparameter eine Größe des thermischen Energiespeichers und/oder eine Isolierung des thermischen Energiespeichers und/oder ein Wärmetauscherwert des thermischen Energiespeichers und/oder eine Anzahl von Temperatursensoren des thermischen Energiespeichers und/oder eine Einbauposition der Temperatursensoren und/oder eine Lage von Heizstäben des thermischen Energiespeichers und/oder eine Einbauposition der Heizstäbe und/oder eine Höhe einer Zuleitung des thermischen Energiespeichers bestimmt werden. Insbesondere kann somit vorgesehen sein, dass eine Vielzahl von Auslegungsparameter für den thermischen Energiespeicher modellbasiert bestimmt werden kann. Dadurch ist es beispielsweise ermöglicht, dass die erforderlichen Energieeinträge auf der Primärseite und die Energieentnahme auf der Sekundärseite bei der Bestimmung des Auslegungsparameters mitbetrachtet werden können. Üblicherweise bildet sich zusätzlich eine Temperaturschichtung innerhalb des thermischen Energiespeichers aus, sodass sich insbesondere die Höhe des Speichers ebenfalls als Auslegungsparameter eignet. Da die Heizstäbe meist direkt im thermischen Energiespeicher mitverbaut werden, eignen sie sich ebenfalls für eine Flexibilisierung, insbesondere die Höhe der Heizstäbe.

Mit anderen Worten kann vorgesehen sein, dass die Größe und beispielsweise die Kapazität des thermischen Energiespeichers als Auslegungsparameter bestimmt werden. Ferner kann die Anzahl, der Typ und die erforderliche Platzierung der Temperatursensoren beziehungsweise Messgeräte, beispielsweise abhängig vom Modell, welches später im Energiesystem zum Einsatz kommt beziehungsweise welche Genauigkeit später erwünscht ist, bestimmt werden. Optional können beispielsweise auch die Kosten für den thermischen Energiespeicher sowie die Abmessung des thermischen Energiespeichers als Auslegungsparameter bestimmt werden. Des Weiteren können optional die Anzahl, der Typ und die erforderliche Platzierung der Heizstäbe als Auslegungsparameter bestimmt werden. Des Weiteren kann die Anzahl, der Typ und die Lage der Durchflussmesser beziehungsweise die Definition des Typs der Zustandsmessung, insbesondere der Ladezustand, welcher auch als State of Charge (SOC) bezeichnet wird, als Auslegungsparameter bestimmt werden. Ferner können die Anzahl und Typ der Messgeräte für alle relevanten Größen mit einer Schnittstelle zu der Recheneinheit, insbesondere der elektronischen Recheneinrichtung, als Auslegungsparameter bestimmt werden. Des Weiteren kann optional die Spezifikation der Kommunikationseinrichtung mit Datenrate, Auflösung der Messwerte und der Abtastrate als Auslegungsparameter bestimmt werden. Ferner können optional Typ und Art der Pumpen, insbesondere ob diese beispielsweise regelbar sein sollen, mit Schnittstellen zur Kommunikationseinrichtung als Auslegungsparameter bestimmt werden. Des Weiteren können optional Typ und Art der Ventile, beispielsweise ob diese regelbar sein sollen, mit Schnittstellen zur Kommunikationseinrichtung als Auslegungsparameter bestimmt werden. Des Weiteren kann eine Vorhersage für die Betriebskosten bei der Implementierung der Empfehlungen und Nutzung eines Energiemanagementsystems gegenüber den Betriebskosten ohne Implementierung und ohne Energiemanagementsystem gegenübergestellt werden, sodass dies ein Indikator für wirtschaftlichen Nutzen sein kann.

Ferner kann vorgesehen sein, dass eine elektrische Energie einer elektrischen Erzeugungseinrichtung des Energiesystems mit bei der Bestimmung des zumindest einen Auslegungsparameters berücksichtigt wird. Insbesondere kann beispielsweise ein Windrad oder eine Photovoltaikanlage als elektrische Erzeugungseinrichtung des Energiesystems angesehen werden. Insbesondere kann dann die elektrische Energie, die durch diese elektrische Erzeugungseinrichtung erzeugt wurde, mit bei der Bestimmung des zumindest einen Auslegungsparameters des thermischen Energiespeichers genutzt werden. Insbesondere kann dadurch beispielsweise berücksichtigt werden, dass weniger energiesystemexterne elektrische Energie genutzt werden muss, um die Last des Verbrauchers decken zu können. Dadurch kann vereinfacht, zuverlässig und präzise der zumindest eine Auslegungsparameter des thermischen Energiespeichers für das Energiesystem bestimmt werden.

Ferner hat es sich als vorteilhaft erwiesen, wenn der zumindest eine Auslegungsparameter zusätzlich in Abhängigkeit eines elektrischen Erzeugungsprofils der elektrischen Erzeugungseinrichtung bestimmt wird. Sollte beispielsweise die elektrische Erzeugungseinrichtung eine Photovoltaikanlage sein, so ist in Abhängigkeit des Sonnenstandes ein elektrisches Erzeugungsprofil gegeben. Beispielsweise wird tagsüber mehr Energie erzeugt als in den Abendstunden. Dieses elektrische Erzeugungsprofil kann dann bei der Auslegung des thermischen Energiespeichers, insbesondere bei der Bestimmung des Auslegungsparameters des thermischen Energiespeichers, mitberücksichtigt werden. Dadurch kann zuverlässig und präzise der zumindest eine Auslegungsparameters des thermischen Energiespeichers bestimmt werden.

Ein weiterer Aspekt der Erfindung betrifft ein Computerprogramm welches direkt in einen Speicher einer Steuereinrichtung einer elektronischen Recheneinrichtung ladbar ist, mit Programm-Mitteln, um die Schritte des Verfahrens nach dem vorhergehenden Aspekt auszuführen, wenn das Programm in der Steuereinrichtung der elektronischen Recheneinrichtung ausgeführt wird.

Ein weiterer Aspekt der Erfindung betrifft eine elektronische Recheneinrichtung für ein Energiesystem zum modellbasierten Bestimmen eines Auslegungsparameters eines thermischen Energiespeichers für das Energiesystem, wobei die elektronische Recheneinrichtung zum Durchführen eines Verfahrens nach dem vorhergehenden Aspekt ausgebildet ist. Beispielsweise kann hierzu die elektronische Recheneinrichtung eine Eingabeeinrichtung zum Eingeben und Auswählen beispielsweise des Preisprofils, beispielsweise des thermischen Lastprofils, beispielsweise der vorgegebenen Maximalleistung für das Lastprofil und beispielsweise für die Eingabe der wärmetechnischen Erzeugungseinrichtung aufweisen. Ferner kann die elektronische Recheneinrichtung eine Ausgabeeinrichtung aufweisen, auf der der zumindest der eine Auslegungsparameter des thermischen Energiespeichers ausgegeben wird.

Die elektronische Recheneinrichtung kann insbesondere einen Computer, einen Mikrocontroller oder einen integrierten Schaltkreis umfassen. Alternativ kann die elektronische Recheneinrichtung einen realen oder virtuellen Verbund von Computern umfassen (ein englischer Fachbegriff für einen realen Verbund ist "Cluster", ein englischer Fachbegriff für einen virtuellen Verbund ist "Cloud").

Die elektronische Recheneinrichtung kann Hardware-Elemente oder Software-Elemente aufweisen, beispielsweise einen Mikroprozessor oder ein sogenanntes FPGA (englisches Akronym für "Field Programmable Gate Array"). Eine Speichereinheit kann als nicht dauerhafte Arbeitsspeicher (Random Access Memory, kurz RAM) oder als dauerhafter Massenspeicher (Festplatte, USB-Stick, SD-Karte, Solid State Disk) realisiert sein.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen.

Die Erfindung wird nun anhand von bevorzugten Ausführungsbeispielen sowie unter Bezugnahme auf die beigefügten Zeichnungen näher erläutert.

Dabei zeigen

FIG 1 ein schematisches Blockschaltbild eines Energiesystems mit zumindest einer Ausführungsform einer elektronischen Recheneinrichtung;

FIG 2 ein schematisches Blockschaltbild einer Ausführungsform einer elektronischen Recheneinrichtung; und

FIG 3 ein schematisches Diagramm zum Bestimmen einer Betriebsstrategie für den thermischen Energiespeicher;

In den Figuren sind gleiche oder funktionsgleiche Elemente mit den gleichen Bezugszeichen versehen.

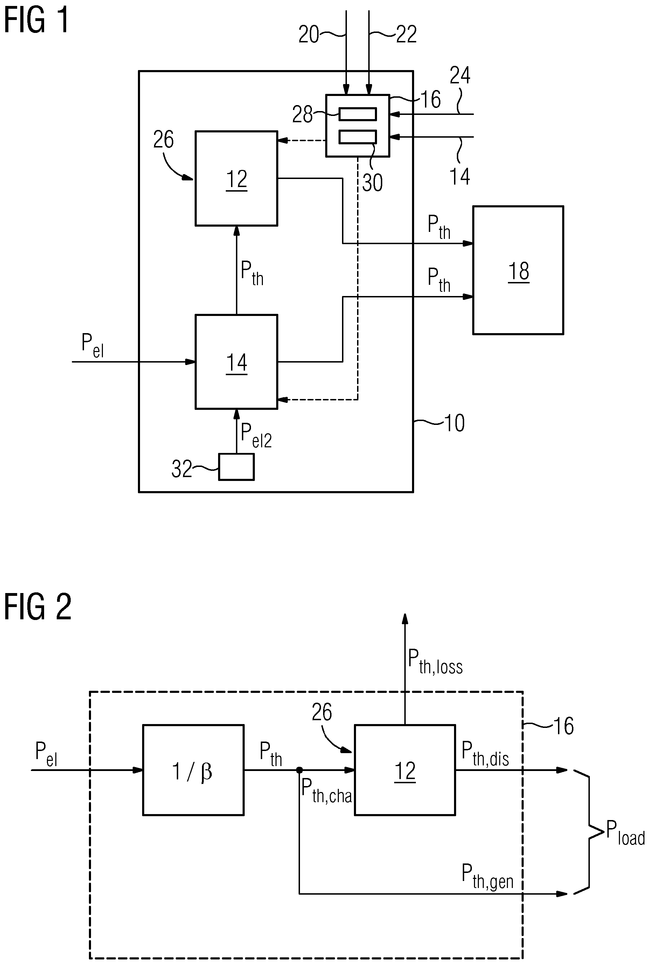

FIG 1 zeigt in einem schematischen Blockschaltbild ein Energiesystem 10 mit einer Ausführungsform einer elektronischen Recheneinrichtung 16. Der Aufbau des dargestellten Energiesystems 10 dient lediglich der Veranschaulichung und ist auf keinen Fall einschränkend zu verstehen für die erfindungsgemäße elektronische Recheneinrichtung 16. Die Fig. 1 dient dem lediglich dem Verständnis für die erfindungsgemäße elektronische Recheneinrichtung 16. Das Energiesystem 10 weist einen thermischen Energiespeicher 12 sowie eine wärmetechnische Erzeugungseinrichtung 14 auf. Die wärmetechnische Erzeugungseinrichtung 14 kann beispielsweise ein Blockheizkraftwerk, eine Wärmepumpe oder ein Heizstab sein. Insbesondere weist das Energiesystem 10 eine elektronische Recheneinrichtung 16 auf. Die elektronische Recheneinrichtung 16 kann dabei als Steuerung beziehungsweise Regelung für das Energiesystem 10 angesehen werden. Mittels der elektronischen Recheneinrichtung 16 kann beispielsweise entschieden werden, ob ein Verbraucher 18 mit thermischer Energie $P_{th}$ aus dem thermischen Energiespeicher 12 oder direkt von der thermischen Erzeugungseinrichtung 14 versorgt wird. Insbesondere wird bei der technischen Erzeugungseinrichtung 14 energiesystemexterne elektrische Energie $P_{el}$ zur Verfügung gestellt. Insbesondere kann somit vorgesehen sein, dass von der wärmetechnischen Erzeugungseinrichtung 14 die energiemanagementexterne elektrische Energie $P_{el}$ in die thermische Energie $P_{th}$ umgewandelt werden kann.

Im vorliegenden Ausführungsbeispiel erfüllt die elektronische Recheneinrichtung 16 zwei Aufgaben. Zum einen kann mittels der elektronischen Recheneinrichtung die Regelung des Energiesystems 10 durchgeführt werden. Die elektronische Recheneinrichtung kann insbesondere dann auch als Energiemanagementsystem bezeichnet werden. Zum anderen ist erfindungsgemäß vorgesehen, dass mittels der hier gezeigten elektronischen Recheneinrichtung 16 auch die Bestimmung des zumindest einen Auslegungsparameters 26 durchgeführt wird. Es ist selbstverständlich, dass für diese beiden Aufgaben auch zwei separate elektronischen Recheneinrichtungen 16 genutzt werden können.

Damit die elektronische Recheneinrichtung 16 diesen Regelprozess durchführen kann, ist insbesondere vorgesehen, dass diese Informationen bezüglich eines vorgegebenen Preisprofils 20 für die energiesystemexterne elektrische Energie $P_{el}$ erhält. Ferner benötigt die elektronische Recheneinrichtung 16 ein vorgegebenes thermisches Lastprofil 22 für die thermische Energie $P_{th}$ des Energiesystems 10. Des Weiteren wird als Eingangsparameter eine vorgegebene Maximalleistung 24 für das Lastprofil 22 eingegeben. Ferner wird die wärmetechnische Erzeugungseinrichtung 14 als Information der elektronischen Recheneinrichtung 16 zur Verfügung gestellt.

Im vorliegenden Ausführungsbeispiel ist die elektronische Recheneinrichtung 16 zum Regeln beziehungsweise Steuern des Energiesystems 10 ausgebildet. Erfindungsgemäß ist zusätzlich vorgesehen, dass die elektronische Recheneinrichtung 16 zum modellbasierten Bestimmen eines Auslegungsparameters 26 des thermischen Energiespeichers 12 für das Energiesystem 10 ausgebildet ist. Hierzu weist die elektronische Recheneinrichtung 16 insbesondere eine Eingabeeinrichtung 28 sowie eine Ausgabeeinrichtung 30 auf. Mit anderen Worten kann die elektronische Recheneinrichtung das Energiesystem 10 simulieren und dadurch den Auslegungsparameter 26 für den thermischen Energiespeicher bestimmen.

Bei dem erfindungsgemäßen Verfahren zum modellbasierten Bestimmen des zumindest einen Auslegungsparameters 26 des thermischen Energiespeichers 12 des Energiesystems 10 wird der zumindest eine Auslegungsparameter 26 in Abhängigkeit des vorgegebenen Preisprofils 20 für die Energiesystemexterne elektrische Energie $P_{el}$ und in Abhängigkeit des vorgegebenen thermischen Lastprofils 22 für thermische Energie $P_{th}$ des Energiesystems 10 und in Abhängigkeit der vorgegebenen Maximalleistung 24 für das Lastprofil 22 und in Abhängigkeit der wärmetechnischen Erzeugungseinrichtung 14 des Energiesystems 10 mittels der elektronischen Recheneinrichtung 16 des Energiesystems 10 bestimmt.

Insbesondere kann vorgesehen sein, dass zum Bestimmen des zumindest einen Auslegungsparameters 26 eine Vielzahl, wobei Vielzahl mehr als eins bedeutet, von Preisprofilen 20, Lastprofilen 22, Maximalleistungen 24 und thermischen Erzeugungseinrichtungen 14 genutzt wird.

Das hierin beschriebene Verfahren kann auch in Form eines Computerprogrammprodukts vorliegen, das das Verfahren auf einer Steuereinheit der elektronischen Recheneinrichtung 16 implementiert, wenn es auf der Steuereinheit ausgeführt wird. Ebenso kann ein elektronisch lesbarer Datenträger (nicht dargestellt) mit darauf gespeicherten elektronisch lesbaren Steuerinformationen vorliegen, welche zumindest ein beschriebenes Computerprogrammprodukt umfassen und derart ausgestaltet sind, dass sie bei Verwendung des Datenträgers in einer Steuereinheit der elektronischen Recheneinrichtung 16 ein beschriebenes Verfahren durchführen.

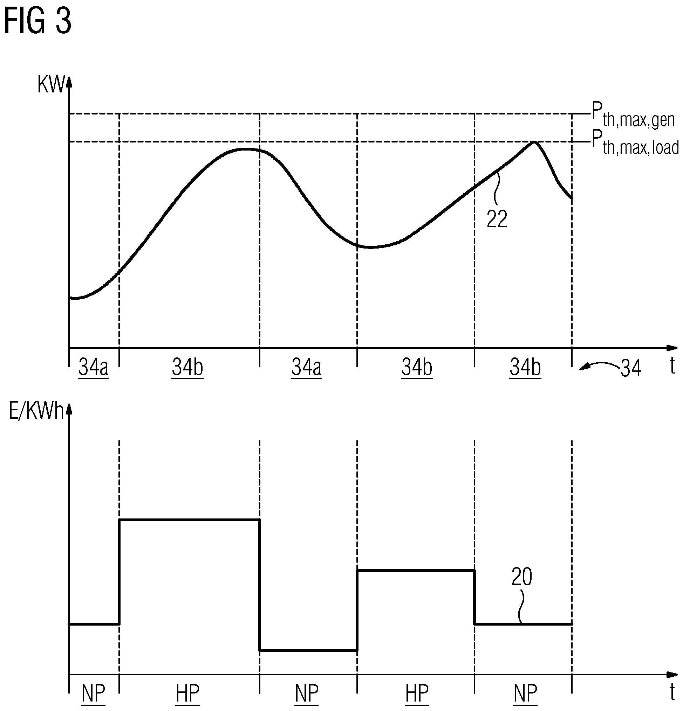

Insbesondere erfolgt über die Eingabeeinrichtung 28 die Eingabe beziehungsweise die Auswahl des Preisprofils 20, mit insbesondere den charakteristischen Höckerbildungen im Tagesverlauf. Insbesondere kann hierzu ein nutzergewähltes Profil, mit beispielsweise einem Hochpreisteil HP (FIG 3) sowie Niedrigpreisteil NP (FIG 3) genutzt werden. Ferner kann auch eine automatische Verwendung von beispielsweise EPEX-Daten und einem Versorgeraufschlag für die elektrische Energie $P_{el}$

als Preisprofil 20 genutzt werden. Ferner kann über die Eingabeeinrichtung 30 die Eingabe beziehungsweise Auswahl des typischen thermischen Lastprofils 22 erfolgen. Des Weiteren kann über die Eingabeeinrichtung 28 die Eingabe beziehungsweise Auswahl der thermischen Maximalleistung 24 für das Lastprofil 22 erfolgen. Des Weiteren kann über die Eingabeeinrichtung 28 die Eingabe/Auswahl von bereits vorhandenen wärmetechnischen Erzeugungsanlagen 14, zum Beispiel des Blockheizkraftwerks, der Wärmepumpe oder von Heizstäben und eine Leistung, insbesondere der Maximalleistung 24, mit zum Beispiel der Temperatur des Fluids und dem Massenstrom, genutzt werden.

Ferner kann vorgesehen sein, dass eine optionale StandardAuslegung des thermischen Wärmespeichers 12, wie beispielsweise Kapazität, Volumen, Höhe und Breite mit bei der Bestimmung des modellbasierten Auslegungsparameters 26 berücksichtigt wird. Insbesondere kann zusätzlich eine optionale Eingabe oder Auswahl eines typischen elektrischen Lastprofils durchgeführt werden. Ferner kann eine optionale Eingabe oder Auswahl eines Aufstellorts, beispielsweise im Innenbereich oder im Außenbereich, durchgeführt werden. Ferner kann eine optionale Eingabe/Auswahl für eine typische Umgebungstemperatur des Aufstellorts eingestellt werden. Des Weiteren kann vorgesehen sein, dass optional verschiedene Speichermodelle des thermischen Energiespeichers 12, beispielsweise ein einfacher thermischer Energiespeicherspeicher 12, ein fortgeschrittener thermischer Energiespeicher 12 oder ein automatischer thermischer Energiespeicher 12, mitberücksichtigt werden. Des Weiteren kann vorgesehen sein, dass optional die Eingabe oder Auswahl von bereits vorhandener PV (Photovoltaik)-Einspeisung am Standort sowie eines elektrischen Erzeugungs-Profils durchgeführt werden kann.

Insbesondere ist vorgesehen, dass als der zumindest eine Auslegungsparameter 26 eine Größe des thermischen Energiespeichers 12 und/oder eine Isolierung, beispielsweise das Material und die Dicke der Isolierung, des thermischen Energiespeichers 12 und/oder ein Wärmetauscherwert des thermischen Energiespeichers 12 und/oder eine Anzahl von Temperatursensoren des thermischen Energiespeichers 12 und/oder eine Einbauposition der Temperatursensoren und/oder eine Lage von Heizstäben des thermischen Energiespeichers 12 und/oder eine Einbauposition der Heizstäbe und/oder eine Höhe einer Zuleitung des thermischen Energiespeichers 12 bestimmt werden. Insbesondere kann somit vorgesehen sein, dass eine Vielzahl von Auslegungsparameter 26 für den thermischen Energiespeicher 12 modellbasiert bestimmt werden kann. Dadurch ist es beispielsweise ermöglicht, dass die erforderlichen Energieeinträge auf der Primärseite und die Energieentnahme auf der Sekundärseite bei der Bestimmung des Auslegungsparameters 26 mitbetrachtet werden können. Üblicherweise bildet sich zusätzlich eine Temperaturschichtung innerhalb des thermischen Energiespeichers 12 aus, sodass sich insbesondere die Höhe des Speichers ebenfalls als Auslegungsparameter 26 eignet. Da die Heizstäbe meist direkt im thermischen Energiespeicher 12 mitverbaut werden, eignen sie sich ebenfalls für eine Flexibilisierung, insbesondere die Höhe der Heizstäbe.

Ferner kann vorgesehen sein, dass das Energiesystem 10 eine elektrische Erzeugungseinrichtung 30 aufweist, welche zum Erzeugen von weiterer elektrischer Energie $P_{el2}$ ausgebildet ist, und die weitere elektrische Energie $P_{el2}$ mit bei der Bestimmung des zumindest einen Auslegungsparameters 26 berücksichtigt wird. Beispielsweise kann die elektrische Erzeugungseinrichtung 32 eine Photovoltaikanlage oder eine Windkraftanlage sein. Insbesondere kann vorgesehen sein, dass der zumindest eine Auslegungsparameter 26 zusätzlich in Abhängigkeit eines elektrischen Erzeugungsprofils der elektrischen Erzeugungseinrichtung 32 bestimmt wird.

Insbesondere kann dann die weitere elektrische Energie $P_{el2}$, die durch diese elektrische Erzeugungseinrichtung 32 erzeugt wurde, mit bei der Bestimmung des zumindest einen Auslegungsparameters 26 des thermischen Energiespeichers 12 genutzt werden. Insbesondere kann dadurch beispielsweise berücksichtigt werden, dass weniger energiesystemexterne elektrische Energie $P_{el}$ genutzt werden muss, um die Last des Verbrauchers 18 decken zu können. Sollte beispielsweise die elektrische Erzeugungseinrichtung 32 eine Photovoltaikanlage sein, so ist in Abhängigkeit des Sonnenstandes ein elektrisches Erzeugungsprofil gegeben. Beispielsweise wird tagsüber mehr Energie erzeugt als in den Abendstunden. Dieses elektrische Erzeugungsprofil kann dann bei der Auslegung des thermischen Energiespeichers 12, insbesondere bei der Bestimmung des Auslegungsparameters 26 des thermischen Energiespeichers 12, mitberücksichtigt werden.

FIG 2 zeigt ein schematisches Blockschaltbild einer Ausführungsform der elektronischen Recheneinrichtung 16. Insbesondere zeigt die FIG 2, dass zum Bestimmen des zumindest einen Auslegungsparameters 26 eine Verhältniszahl $\beta$ zwischen genutzter elektrischer Leistung $P_{el}$ und erzeugter thermischer Leistung $P_{th, gen}$ der wärmetechnischen Erzeugungseinrichtung 14 mittels der elektronischen Recheneinrichtung 16 bestimmt wird. Insbesondere zeigt die FIG 2, wie modellbasiert der Auslegungsparameter 26 für den thermischen Energiespeicher 12 bestimmt wird. Insbesondere wird hierzu zunächst ermittelt, mit welcher Komponente die thermische Energie $P_{th, gen}$ erzeugt wird. Beispielhaft können ein Blockheizkraftwerk, eine Wärmepumpe und ein Heizstab genannt werden. Ferner wird ermittelt, wie sich die elektrische Leistung $P_{el}$ zur thermischen Leistung $P_{th, gen}$ verhält. Im Beispiel der Wärmepumpe kann beispielsweise mit einem kW elektrischer Leistung $P_{el}$, wobei hierbei der Verbrauch positiv ist, beispielsweise 4 kW thermische Leistung $P_{th, gen}$, wobei dies einer negativen Leistung entspricht, erzeugt werden. Aus dem Verhältnis kann dann die Verhältniszahl $\beta$ gebildet werden. Beim gasbetriebenen Blockheizkraftwerk werden elektrische Leis-

tung $P_{el}$ und thermische Leistung $P_{the, gen}$ erzeugt. Gegebenen ist außerdem, welche maximal erzeugbare thermische Leistung $P_{th, max, gen}$ die thermische Erzeugungseinrichtung 14 maximal erzeugen kann.

Insbesondere kann mittels der elektronischen Recheneinrichtung 16 dann die Nutzleistung $P_{Load}$ bestimmt werden.

Ferner kann vorgesehen sein, dass der zumindest eine Auslegungsparameter 26 bei einem vorgegebenen Arbeitspunkt, insbesondere bei einer vorgegebenen Außentemperatur für den thermischen Energiespeicher 12 bestimmt wird. Alternativ kann der zumindest eine Auslegungsparameter 26 bei einem vorgegebenen Außentemperaturprofil, welches zeitlich aufgelöst die Außentemperatur aufweist, für den thermischen Energiespeicher 12, bestimmt werden. Insbesondere ist hier der Hintergrund darin, dass in der Realität die Verhältniszahl β nicht konstant ist, sondern zum Beispiel von der Außentemperatur oder der Auslastung der wärmetechnischen Erzeugungseinrichtung 14 abhängig sein kann. In einer Ausprägung des Verfahrens wird somit die Verhältniszahl β bei dem vorbestimmten Arbeitspunkt genutzt.

In einer weiteren Ausführung können auch genauere Modelle der Komponenten zum Einsatz kommen und Abhängigkeiten berücksichtigen. Insbesondere können hierzu als Abhängigkeiten das Außentemperaturprofil beziehungsweise der Arbeitspunkt angesehen werden.

Insbesondere zeigt die FIG 2, dass die elektronische Recheneinrichtung 16 zusätzlich eine Verlustleistung $P_{th, loss}$ des thermischen Energiespeichers 12, beispielsweise auf Basis der Isolierung des thermischen Energiespeichers 12, mitberücksichtigt. Als Ausgangswert des thermischen Energiespeichers 12 kann eine Leistung zum Entladen $P_{th, dis}$ des thermischen Energiespeichers 12 angesehen werden. Ferner gilt als Eingang für den thermischen Energiespeicher 12 die Leistung zum Laden $P_{th, cha}$ des thermischen Energiespeichers 12 gezeigt. Des Weiteren zeigt die FIG 2 die generierte beziehungsweise erzeugte thermische Leistung $P_{th, gen}$.

FIG 3 zeigt ein schematisches Diagramm, in welchem ein zeitlich abhängiges Preisprofil 20 einem zeitlich abhängigen Lastprofil 22 gegenübergestellt ist. Insbesondere zeigt die Figur eine Betriebsstrategie 34. Insbesondere kann als Betriebsstrategie 34 eine direkte Nutzung der thermischen Energie $P_{th}$ für den Verbraucher 18 als erste Betriebsstrategie 34a angesehen werden und eine zweite Betriebsstrategie 34b kann dadurch angesehen werden, dass die thermische Energie $P_{th}$ des thermischen Energiespeichers 12 genutzt wird. Insbesondere zeigt die FIG 3 die maximal erzeugbare thermische Leistung $P_{th, max, gen}$, die die wärmetechnische Erzeugungseinrichtung 14 erzeugen kann. Ferner zeigt die FIG 3 die maximale thermische Nutzleistung $P_{th, max, load}$. Im unteren Diagramm ist, wie bereits erwähnt, insbesondere das Preisprofil 20 gezeigt. Das Preisprofil 20 weist einen Niedrigpreisteil NP auf und einen Hochpreisteil HP auf. Die Betriebsstrategie 34, wird dann insbesondere in Abhängigkeit dieser Niedrigpreisteile NP beziehungsweise Hochpreiseile HP gewählt. Aus dem Lastprofil 22, welches im vorliegenden Beispiel über 24 Stunden als Zeit t aufgetragen ist, und in Kilowattstunden angegeben wird, beispielsweise der maximal thermischen Leistung $P_{TH, max}$, sowie dem vorgegebenen Preisprofil 20 für den Strombezug, wodurch insbesondere die Betriebsstrategie 34 abgeleitet wird. Zunächst wird hierzu das Preisprofil 20 in den Niedrigpreisteil NP und dem Hochpreisteil HP eingeteilt.

Insbesondere kann hierzu vorgesehen sein, dass der zumindest Auslegungsparameter 26 derart bestimmt wird, dass bei einer negativen Verhältniszahl β und bei einem Hochpreisteil HP des vorgegebenen Preisprofils 20 die thermische Energie $P_{th}$ des thermischen Energiespeichers 12 für den Verbraucher 18 genutzt wird. Ferner kann der zumindest eine Auslegungsparameter 26 derart bestimmt sein, dass bei einer positiven Verhältniszahl β und bei einem Niedrigpreisteil NP des vorgegebenen Preisprofils 20 die erzeugte thermische Energie $P_{th}$ der wärmetechnischen Erzeugungseinrichtung 14 zum Laden des thermischen Energiespeichers 12 genutzt wird. Ferner kann der zumindest eine Auslegungsparameter 26 derart bestimmt sein, dass bei einer negativen Verhältniszahl β und bei einem Niedrigpreisteil NP des vorgegebenen Preisprofils 20 die erzeugte thermische Energie $P_{th}$ der wärmetechnischen Erzeugungseinrichtung 14 für den Verbraucher 18 direkt genutzt wird. Ferner kann der zumindest eine Auslegungsparameter 26 derart bestimmt werden, dass bei einer positiven Verhältniszahl β bei einem Hochpreisteil HP des vorgegebenen Preisprofils 20 die erzeugte thermische Energie $P_{th}$ der wärmetechnischen Erzeugungseinrichtung 14 für den Verbraucher 18 direkt genutzt wird.

Die einfache Betriebsstrategie 34 für die Auslegung des thermischen Energiespeichers 12 sieht vor, dass die wärmetechnische Erzeugungseinrichtung 14 bei negativen β, beispielsweise bei einem Heizstab oder bei einer Wärmepumpe, und geringen Preisen, also im Niedrigpreisteil NP, direkt die Last deckt und mit der verbleibenden Wärme den thermischen Energiespeicher 12 lädt. Bei hohen Preisen, mit anderen Worten beim Hochpreisteil HP, wird die Last primär aus dem thermischen Energiespeicher 12 gedeckt. Ist die Verhältniszahl β positiv, beispielsweise beim Blockheizkraftwerk, dient die lokale elektrische Erzeugung dazu, die vom Verteilnetz benötigte elektrischen Energie $P_{el}$ im Hochpreisfenster zu reduzieren und den thermischen Energiespeicher 12 während der Hochpreisphase von der wärmetechnischen Erzeugungseinrichtung 14 zu laden.

Falls für die, ohnehin im Rahmen einer Beschaffung des thermischen Energiespeichers 12 erfolgte, Berechnung der Speichergröße bereits ein herkömmliches Standardverfahren, beispielsweise eine Speicherauslegung basierend auf Nutzungsverhalten, das heißt thermischer Bedarf kann immer gedeckt werden, herangezogen wurde, so bildet diese Auslegung die unterer Grenze. Ist diese nicht vorhanden, wird diese Speichergröße mit dem erfindungsgemäßen Verfahren bestimmt.

Zusätzlich kann, mittels des erfindungsgemäßen Verfahrens geklärt werden, um wieviel größer der thermische Energiespeicher 12 sinnvollerweise sein soll, damit zukünftig Energy-Management-Use-Cases, also Anwendungsfälle des Energiesystems 10, unter den oben angegebenen Rahmenbedingungen, insbesondere in Abhängigkeit des Preisprofils 20 sowie des Lastprofils 22, abgedeckt werden können. Bei thermischen Energiespeichern 12 steigen die Kosten für eine Vergrößerung, sofern der Platz vorhanden ist, im Gegensatz zu anderen Speicherformen, wie zum Beispiel Batterien, nur moderat an. Daher kann die Anschaffung eines größeren thermischen Energiespeichers 12 für zukünftige Anwendungsfälle sinnvoll sein.

Allerdings ist es insbesondere erforderlich, dass die erforderlichen Energieeinträge auf der Primärseite und die Energieentnahme auf der Sekundärseite bei der Auslegung des thermischen Energiespeichers 12, beispielsweise beim Durchmesser, oder Höhe, mitbetrachtet werden. Üblicherweise bildet sich eine Temperaturschichtung aus, sodass sich insbesondere eine Höhe des thermischen Energiespeichers 12 gut für die Skalierung eignet. Da die Heizstäbe meist direkt im Speicher mitverbaut werden und kaum Kosten verursachen, eignen sie sich ebenfalls gut für eine Flexibilisierung des thermischen Energiespeichers 12. Ausgehend von der Standardauslegung des thermischen Energiespeichers 12 mit der Kapazität $C_{TES, std}$ in Kilowattstunden, des Lastprofils 22 und des Preisprofils 20 können die Kosten für den Strombezug bei dieser Speicherkapazität ermittelt werden. Der Zusammenhang zwischen elektrischer Leistung $P_{el}$ und erzeugter thermischer Leistung $P_{zh, gen}$ in Abhängigkeit der Zeit t für die wärmetechnische Erzeugungseinrichtung 14 ist in der nachfolgenden Formel:

$$ P_{el}^t = -P_{th,gen}^t * \beta $$

Ist im thermischen Energiespeicher 12 zum Beispiel noch ein Heizstab verbaut, so muss dieser extra berücksichtigt werden. Dadurch ist es ermöglicht, dass die Kosten für den Betrieb des thermischen Energiespeichers 12 jederzeit ermittelt werden können und dann über den gesamten Zeitraum aufsummiert werden können. Ob und wieviel Energie in einem Zeitschritt in den thermischen Energiespeicher 12 geladen werden kann, hängt von der Kapazität des thermischen Energiespeichers 12 und der maximalen Leistung der wärmetechnischen Erzeugungseinrichtung 14 ab.

Die Kosten lassen sich, insbesondere durch das erfindungsgemäße Verfahren, nun für verschiedene Speicherkapazitäten zusätzlich bestimmen. Somit kann beispielsweise ein Vertrieb einer Aussage darüber erhalten, ob sich eine zusätzliche Vergrößerung des thermischen Energiespeichers 12 oder der Einsatz eines Heizstabes lohnt.

Mit anderen Worten kann vorgesehen sein, dass die Größe und beispielsweise die Kapazität des thermischen Energiespeichers 12 als Auslegungsparameter 26 bestimmt werden. Ferner kann die Anzahl, der Typ und die erforderliche Platzierung der Temperatursensoren beziehungsweise Messgeräte, beispielsweise abhängig vom Modell, welches später im Energiesystem 10 zum Einsatz kommt beziehungsweise welche Genauigkeit später erwünscht ist, bestimmt werden. Optional können beispielsweise auch die Kosten für den thermischen Energiespeicher 12 sowie die Abmessung des thermischen Energiespeichers 12 als Auslegungsparameter 26 bestimmt werden. Des Weiteren können optional die Anzahl, der Typ und die erforderliche Platzierung der Heizstäbe als Auslegungsparameter 26 bestimmt werden. Des Weiteren kann die Anzahl, der Typ und die Lage der Durchflussmesser beziehungsweise die Definition des Typs der Zustandsmessung, insbesondere der Ladezustand, welcher auch als State of Charge (SOC) bezeichnet wird, als Auslegungsparameter 26 bestimmt werden. Ferner können die Anzahl und Typ der Messgeräte für alle relevanten Größen mit einer Schnittstelle zu der elektronischen Recheneinrichtung 16, als Auslegungsparameter 26 bestimmt werden. Des Weiteren kann optional die Spezifikation der Kommunikationseinrichtung mit Datenrate, Auflösung der Messwerte und der Aufnehmrate als Auslegungsparameter 26 bestimmt werden. Ferner können optional Typ und Art der Pumpen, insbesondere ob diese beispielsweise regelbar sein sollen, mit Schnittstellen zur Kommunikationseinrichtung als Auslegungsparameter 26 bestimmt werden. Des Weiteren können optional Typ und Art der Ventile, beispielsweise ob diese regelbar sein sollen, mit Schnittstellen zur Kommunikationseinrichtung als Auslegungsparameter 26 bestimmt werden. Des Weiteren kann eine Vorhersage für die Betriebskosten bei der Implementierung der Empfehlungen und Nutzung eines Energiesystems 10 gegenüber der Betriebskosten ohne Implementierung und ohne Energiesystem 10 gegenübergestellt werden, sodass dies ein Indikator für wirtschaftlichen Nutzen sein kann.

Insbesondere zeigt somit die erfindungsgemäße Lösung, dass ein einfacher Einbau von Energiesystemen 10 erleichtert wird. Hierdurch kann eine Kostenersparnis im Betrieb durch weitere Anwendungsfälle, zum Beispiel die Regelenergiemarktteilnahme, ermöglicht werden. Besonders vorteilhaft ist, dass der Vertrieb ohne detaillierte Energiesystemdesign-Kenntnisse einen thermischen Energiespeicher 12 auslegen kann. Durch das heuristische Verfahren kann ein Betrieb des Energiesystems 10 sehr recheneffizient simuliert werden. Bei dieser im Anwendungsfall thermischen Energiespeicher 12 zugeschnittenen Lösung über typische Energiedesigntools hinausgehende Aspekte können betrachtet werden. Insbesondere kann der Trade-Off, also der Austausch, zwischen mehr Messstellen im thermischen Energiespeicher 12 und daher eine genauere Bestimmung des state of charge, des sogenannten SOC, und einer größeren Auslegung des thermischen Energiespeichers 12 und damit einfach mehr Puffer in den Randbereichen des SOC betrachtet werden. Ebenso kann durch die Kenntnis des modellbasierten Energiesystems 10 direkt eine Handlungsempfehlung für die erforderliche Anzahl an Messstellen ermittelt werden. Passend zu späterer Modellqualität im Energiesystem 10 kann hier eine entsprechende hardwaretechnische Ausrüstung gewählt werden. Hierbei kann der Trade-Off zu zusätzlichen Kosten für Software und Rechenpower beziehungsweise Rechenzeit gegenüber zusätzlicher Hardware betrachtet werden.

Wo noch nicht explizit geschehen, jedoch sinnvoll und im Sinne der Erfindung, können einzelne Ausführungsbeispiele, einzelne ihrer Teilaspekte oder Merkmale mit einander kombiniert bzw. ausgetauscht werden, ohne den Rahmen der hiesigen Erfindung zu verlassen. Mit Bezug zu einem Ausführungsbeispiel beschriebene Vorteile der Erfindung treffen ohne explizite Nennung, wo übertragbar, auch auf andere Ausführungsbeispiele zu.

Bezugszeichenliste

| 10 | Energiemanagementsystem |
| 12 | Thermischer Energiespeicher |
| 14 | Wärmetechnische Erzeugungseinrichtung |
| 16 | Elektronische Recheneinrichtung |
| 18 | Verbraucher |
| 20 | Vorgegebenes Preisprofil |
| 22 | Vorgegebenes Lastprofil |
| 24 | Vorgegebene Maximalleistung |
| 26 | Auslegungsparameter |
| 28 | Eingabeeinrichtung |
| 30 | Ausgabeeinrichtung |
| 32 | Elektrische Erzeugungseinrichtung |
| 34 | Betriebsstrategie |
| 34a | Erste Betriebsstrategie |
| 34b | Zweite Betriebsstrategie |
| $P_{el}$ | energiemanagementsystemexterne elektrische Energie |
| $P_{el2}$ | weitere elektrische Energie |
| $P_{th}$ | Thermische Energie |
| $P_{th, cha}$ | Leistung zum Entladen |
| $P_{th, dis}$ | Leistung zum Laden |
| $P_{th, gen}$ | Erzeugte thermische Leistung |
| $P_{th, loss}$ | Verlustleistung |
| $P_{load}$ | Nutzleistung |
| $P_{th, max, gen}$ | Maximal erzeugbare Leistung |
| $P_{th, max, load}$ | Maximal thermische Nutzleistung |

**Patentansprüche**

1. Verfahren zum modellbasierten Bestimmen zumindest eines Auslegungsparameters (26) eines thermischen Energiespeichers (12) eines Energiesystems (10) zum Erzeugen von thermischer Energie ($P_{th}$) für einen Verbraucher (18) des Energiesystems (10) mittels des Energiesystems (10), bei welchem der zumindest eine Auslegungsparameter (26) in Abhängigkeit zumindest eines vorgegebenen Preisprofils (20) für energiesystemexterne elektrische Energie ($P_{el}$) und in Abhängigkeit zumindest eines vorgegebenen thermischen Lastprofils (22) für thermische Energie ($P_{th}$) des Energiesystems (10) und in Abhängigkeit zumindest einer vorgegebenen Maximalleistung (24) für das Lastprofil (22) und in Abhängigkeit zumindest einer wärmetechnischen Erzeugungseinrichtung (14) des Energiesystems (10) mittels einer elektronischen Recheneinrichtung (16) des Energiesystems (10) bestimmt wird.

2. Verfahren nach Anspruch 1, **dadurch gekennzeichnet, dass** zum Bestimmen des zumindest einen Auslegungsparameters (26) eine Verhältniszahl (β) zwischen genutzter elektrischer Leistung ($P_{el}$) und erzeugter thermischer Leistung ($P_{th, gen}$) mittels der elektronischen Recheneinrichtung (16) genutzt wird.

3. Verfahren nach Anspruch 1 oder 2, **dadurch gekennzeichnet, dass** der zumindest eine Auslegungsparameter (26) bei einem vorgegebenen Arbeitspunkt, insbesondere bei einer vorgegebenen Außentemperatur für den thermischen Energiespeicher (12), bestimmt wird.

4. Verfahren nach Anspruch 1 oder 2, **dadurch gekennzeichnet, dass** der zumindest eine Auslegungsparameter (26) bei einem vorgegebenen Außentemperaturprofil, welches zeitlich aufgelöst die Außentemperatur aufweist, für den thermischen Energiespeicher (12), bestimmt wird.

5. Verfahren nach einem der vorhergehenden Ansprüche, **dadurch gekennzeichnet, dass** zum Bestimmen des zumindest einen Auslegungsparameters (26) eine Betriebsstrategie (34) des thermischen Energiespeichers (12) in Abhängigkeit des vorgegebenen Preisprofils (20) und des thermischen Lastprofils (22) erzeugt wird.

6. Verfahren nach Anspruch 2 und einem der Ansprüche 3 bis 5, **dadurch gekennzeichnet, dass** der zumindest eine Auslegungsparameter (26) derart bestimmt wird, dass bei einer negativen Verhältniszahl (β) und bei einem Hochpreisteil (HP) des vorgegebenen Preisprofils (20) die thermische Energie ($P_{th}$) des thermischen Energiespeichers (12) für den Verbraucher (18) genutzt wird. (34b)

7. Verfahren nach Anspruch 2 und einem der Ansprüche 3 bis 6, **dadurch gekennzeichnet, dass** der zumindest eine Auslegungsparameter (26) derart bestimmt wird, dass bei einer positiven Verhältniszahl ($\beta$) und bei einem Niedrigpreisteil (NP) des vorgegebenen Preisprofils (20) die erzeugte thermische Energie ($P_{th, gen}$) der wärmetechnischen Erzeugungseinrichtung (14) zum Laden des thermischen Energiespeichers (12) genutzt wird. (34a)

8. Verfahren nach Anspruch 2 und einem der Ansprüche 3 bis 7, **dadurch gekennzeichnet, dass** der zumindest eine Auslegungsparameter (26) derart bestimmt wird, dass bei einer negativen Verhältniszahl ($\beta$) und bei einem Niedrigpreisteil (NP) des vorgegebenen Preisprofils (20) die erzeugte thermische Energie ($P_{th, gen}$) der wärmetechnischen Erzeugungseinrichtung (14) für den Verbraucher (18) direkt genutzt wird. (34a)

9. Verfahren nach Anspruch 2 und einem der Ansprüche 3 bis 8, **dadurch gekennzeichnet, dass** der zumindest eine Auslegungsparameter (26) derart bestimmt wird, dass bei einer positiven Verhältniszahl ($\beta$) und bei einem Hochpreisteil (HP) des vorgegebenen Preisprofils (20) die erzeugte thermische Energie ($P_{th, gen}$) der wärmetechnischen Erzeugungseinrichtung (14) für den Verbraucher (18) direkt genutzt wird. (34b)

10. Verfahren nach einem der vorhergehenden Ansprüche, **dadurch gekennzeichnet, dass** als der zumindest eine Auslegungsparameter (26) eine Größe des thermischen Energiespeichers (12) und/oder eine Isolierung des thermischen Energiespeichers (12) und/oder ein Wärmetauscherwert des thermischen Energiespeichers (12) und/oder eine Anzahl von Temperatursensoren des thermischen Energiespeichers (12) und/oder eine Einbauposition der Temperatursensoren und/oder eine Lage von Heizstäben des thermischen Energiespeichers (12) und/oder eine Einbauposition der Heizstäbe und/oder eine Höhe einer Zuleitung des thermischen Energiespeichers (12) bestimmt werden.

11. Verfahren nach einem der vorhergehenden Ansprüche, **dadurch gekennzeichnet, dass** eine weitere elektrische Energie ($P_{el2}$) einer elektrische Erzeugungseinrichtung (32) des Energiesystems (10) mit bei der Bestimmung des zumindest einen Auslegungsparameters (26) berücksichtigt wird.

12. Verfahren nach Anspruch 11, **dadurch gekennzeichnet, dass** der zumindest eine Auslegungsparameter (26) zusätzlich in Abhängigkeit eines elektrischen Erzeugungsprofils der elektrischen Erzeugungseinrichtung (32) bestimmt wird.

13. Computerprogrammprodukt, welches direkt in einen Speicher einer Steuereinrichtung einer elektronischen Recheneinrichtung (16) ladbar ist, mit Programm-Mitteln, um die Schritte des Verfahrens nach einem der Ansprüche 1 bis 12 auszuführen, wenn das Programm in der Steuereinrichtung der elektronischen Recheneinrichtung (16) ausgeführt wird.

14. Elektronische Recheneinrichtung (16) für ein Energiesystem (10) zum modellbasierten Bestimmen eines Auslegungsparameters (26) eines thermischen Energiespeichers (12) für das Energiesystem (10) mit einem Computerprogrammprodukt nach Anspruch 13.

FIG 1

FIG 2

# FIG 3

Europäisches Patentamt

European Patent Office

Office européen des brevets

# EUROPÄISCHER RECHERCHENBERICHT

Nummer der Anmeldung

EP 19 16 9596

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2018/254632 A1 (ELBSAT MOHAMMAD N [US] ET AL) 6. September 2018 (2018-09-06) * Absätze [0239] - [0242], [0287], [0098], [0229], [0256] - [0265]; Abbildungen 5,7 *<br><br>----- | 1-14 | INV.<br>H02J3/00<br>H02J3/14 |

RECHERCHIERTE SACHGEBIETE (IPC)

H02J

Der vorliegende Recherchenbericht wurde für alle Patentansprüche erstellt

| Recherchenort | Abschlußdatum der Recherche | Prüfer |
|---|---|---|
| München | 19. September 2019 | Ramcke, Ties |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 19 16 9596

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-09-2019

| Im Recherchenbericht angeführtes Patentdokument | Datum der Veröffentlichung | Mitglied(er) der Patentfamilie | Datum der Veröffentlichung |
|---|---|---|---|
| US 2018254632 A1 | 06-09-2018 | KEINE | |

Für nähere Einzelheiten zu diesem Anhang : siehe Amtsblatt des Europäischen Patentamts, Nr.12/82

EPO FORM P0461